## Europäisches Patentamt

## European Patent Office

## Office européen des brevets

(19)

(11) Veröffentlichungsnummer: **0 324 935**

**A2**

(12) # EUROPÄISCHE PATENTANMELDUNG

(21) Anmeldenummer: **88120122.2**

(51) Int. Cl.⁴: **B23K 37/02**

(22) Anmeldetag: **02.12.88**

(30) Priorität: **19.01.88 DE 3801280**

(43) Veröffentlichungstag der Anmeldung:
**26.07.89 Patentblatt 89/30**

(84) Benannte Vertragsstaaten:
**FR IT**

(71) Anmelder: **MESSER GRIESHEIM GMBH**
**Hanauer Landstrasse 330**
**D-6000 Frankfurt/Main 1(DE)**

(72) Erfinder: **Klein, Werner**
**Mühlheimerstrasse 19**
**D-6000 Frankfurt 61(DE)**
Erfinder: **Herbener, Klaus**
**Fritz-Schubert-Ring 22 A**
**D-6454 Bruchköbel(DE)**
Erfinder: **Staacks, Dieter**
**Kaupenweg 4**
**D-6057 Dietzenbach-Hexenb.(DE)**

(54) **Führungsmaschine für Brenner.**

(57) Die Erfindung betrifft eine Führungsmaschine für Brenner (12), insbesondere für Plasma-Schneidbrenner, mit mindestens einem Brenneraggregat (10), an dem ein gegenüber der Senkrechten neigungseinstellbar gelagerter Brenner (12) in einem Brennerhalter (11) angeordnet und der Brenner über ein Brennerschlauchpaket (18) mit Versorgungseinheiten (19) verbunden ist.

Bei der Einstellung des Brenners unter einem Winkel zu der Werkstückoberfläche muß ein die Brenner mit Versorgungseinheiten verbindendes Brennerschlauchpaket in größerer Länge als bei senkrechter Brenneranordnung zur Verfügung stehen. Dieser sich oberhalb des Brennerhalters in Form einer Schleife aubildende Teil des Brennerschlauchpaketes bildet bei der Einstellung des Brenners einen Widerstand, welcher bei der Brennereinstellung überwunden werden muß.

Erfindungsgemäß wird daher vorgeschlagen, daß bei der Neigungseinstellung des Brenners eine Einrichtung (27,29,30,32) die relativen Längenänderungen des Brennerschlauchpaketes (18) erfaßt und in Abhängigkeit hiervon Signale erzeugt, mittels welchen ein das Brennerschlauchpaket verschiebender Antrieb (24,25) gesteuert wird

FIG.1

## Führungsmaschine für Brenner

Die Erfindung betrifft eine Führungsmaschine für Brenner, insbesondere für Plasma-Schneidbrenner, mit mindestens einem Brenneraggregat an dem ein gegenüber der Senkrechten neigungseinstellbar gelagerter Brenner in einem Brennerhalter angeordnet und der Brenner über ein Brennerschlauchpaket mit Versorgungseinheiten verbunden ist.

Führungsmaschinen für Brenner bestehen im wesentlichen aus einem über dem Werkstück verfahrbaren Querträger, an welchem mindestens ein senkrecht zu der Fahrtrichtung des Querträgers verfahrbares Brenneraggregat angeordnet ist. Mit dem Brenneraggregat wird ein Schneidbrenner senkrecht oder unter einem Winkel zur Werkstückoberfläche angestellt und in vorgegebenem Abstand über der Werkstückoberfläche positioniert. Es gibt weiterhin Bearbeitungsfälle, bei denen es erwünscht ist, wenn das Brenneraggregat Baueinheiten aufweist, mit denen der Schneidbrenner um eine Drehachse drehbar ist.

Aus der DE 35 27 954 C2 ist ein Brenneraggregat bekannt, bei dem die gegenüber der Senkrechten neigungseinstellbar gelagerten Brenner über ein Getriebe daran gehindert werden, sich bei drehenden Baueinheiten des Brenneraggregats mitzudrehen. Durch dieses Getriebe wird vorteilhaft ein Verwinden des Brennerschlauchpaketes vermieden.

Bei der Einstellung des Brenners unter einem Winkel zu der Werkstückoberfläche muß jedoch ein die Brenner mit Versorgungseinheiten verbindendes Brennerschlauchpaket in größerer Länge als bei senkrechter Brenneranordnung zur Verfügung stehen. Dieser sich oberhalb des Brennerhalters in Form einer Schleife ausbildende Teil des Brennerschlauchpaketes bildet bei der Einstellung des Brenners einen Widerstand, welcher bei der Brennereinstellung überwunden werden muß.

Der Erfindung liegt daher die Aufgabe zugrunde, den durch das Brennerschlauchpaket gebildeten Widerstand gegen die Brennereinstellung zu verringern.

Diese Aufgabe wird erfindungsgemäß dadurch gelöst, daß bei der Neigungseinstellung des Brenners eine Einrichtung die relativen Längenänderungen des Brennerschlauchpaketes erfaßt und in Abhängigkeit hiervon Signale erzeugt, mittels welchen ein das Brennerschlauchpaket verschiebender Antrieb gesteuert wird.

Die Erfindung ermöglicht es nunmehr, daß sich bei der Neigungseinstellung des Brenners die Länge des Brennerschlauchpaketes entsprechend dem eingestellten Neigungswinkel automatisch nachstellt. Beim Betriebseinsatz bringt die Erfindung den Vorteil, daß der Widerstand des Brennerschlauchpaketes gegen die Einstellbewegung des Brenners nahezu vollständig aufgehoben wird, wodurch die Positioniergenauigkeit des Brenners verbessert wird. Hinzu kommt, daß Beschädigungen des Brennerschlauchpaketes durch die bei der Einstellung des Brenners entstehenden Laständerungen vermieden werden.

Weitere vorteilhafte Ausbildungen der Erfindung sind in den Unteransprüchen angegeben.

Ein Ausführungsbeispiel der Erfindung ist in der Zeichnung dargestellt und wird im folgenden näher beschrieben.

Es zeigen:

Fig. 1 eine schematische Seitenansicht eines unendlich drehbaren Brenneraggregates;

Fig. 2 eine schematische Draufsicht des Hohlkörpers entlang der Linie A-A der Fig. 1.

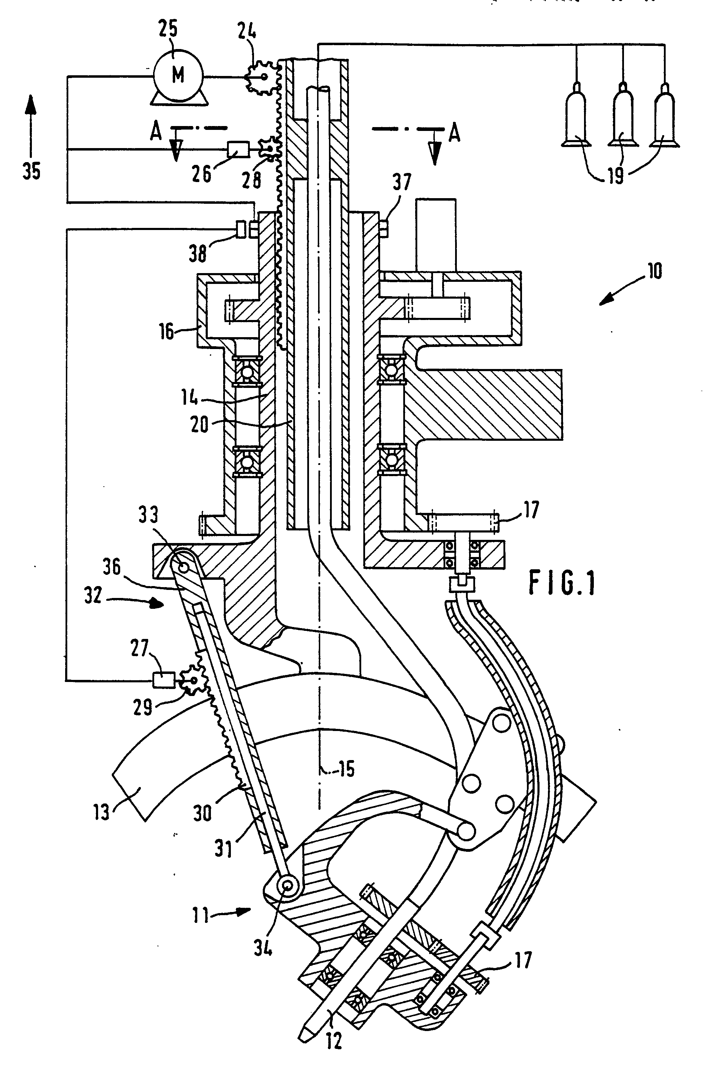

In Fig. 1 ist ein Brenneraggregat 10 dargestellt, das in seinem Aufbau und seiner Funktionsweise in wesentlichen Teilen dem bekannten Brenneraggregat nach der DE 35 27 954 C2 entspricht. Es besteht aus einem Brennerhalter 11, in dem ein Schneidbrenner 12 gelagert ist, einer kreisbogenförmigen Kulisse 13, auf welcher der Brennerhalter 11 neigungseinstellbar angeordnet ist und einem Kulissenhalter 14, der um eine Achse 15 drehbar mit dem Gehäuse 16 eines nicht näher dargestellten Querantriebswagen einer Brennschneidmaschine verbunden ist. Über ein Getriebe 17 wird der Schneidbrenner 12 daran gehindert, sich bei drehendem Kulissenhalter 14 mitzudrehen.

Der Schneidbrenner 12 ist über ein Brennerschlauchpaket 18 mit Versorgungsleitungen 19 verbunden, die in Fig. 1 nur schematisch dargestellt sind. Über die Versorgungseinheiten 19 werden dem Schneidbrenner 12 beispielsweise Schneid- und Schutzgase sowie Kühlwasser und Energie zugeführt.

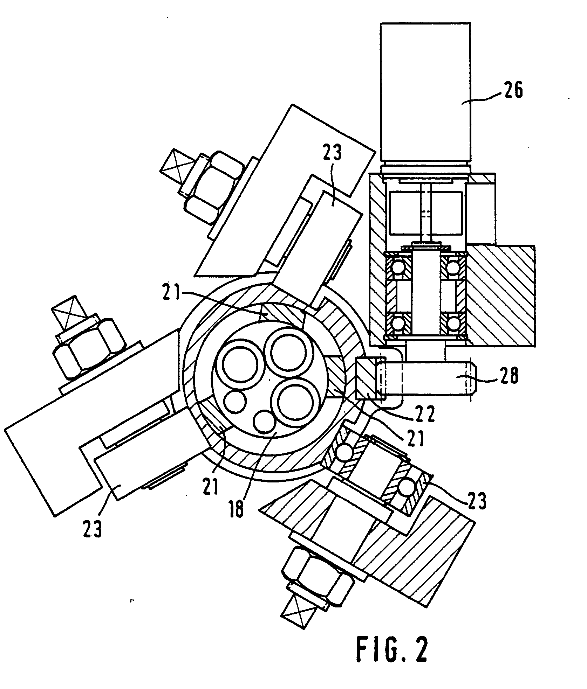

Das Brennerschlauchpaket 18 wird in einem Hohlkörper 20 durch das Brenneraggregat 10 zu den Versorgungseinheiten 19 geführt und ist über Befestigungselemente 21 (Fig. 2) mit dem Hohlkörper 20 verbunden. Der Hohlkörper 20 ist zwischen Führungselementen 23 verdrehsicher geführt. Zwischen den Führungselementen 23 ist an der Außenfläche des Hohlkörpers 20 eine Zahnstange 22 befestigt, die über mindestens ein Zahnrad 24 mit einem Motor 25 verbunden ist.

Selbstverständlich ist es auch möglich, zwischen dem Motor 25 und dem Zahnrad 24 ein Getriebe anzuordnen.

Der Motor 25 zum vertikalen Verstellen des Hohlkörpers 20 mit dem Brennerschlauchpaket 18 wird über zwei elektrische Geber 26, 27 angesteuert, die über eine Gleichlaufschaltung (elektrische Welle) miteinander verbunden sind. Das Zahnrad 28 des elektrischen Gebers 26 kämmt hierzu mit den Zähnen der an dem Hohlkörper 20 angeordneten Zahnstange 22 und das Zahnrad 29 des elektrischen Gebers 27 mit einer zwischen Brennerhalter 11 und Kulissenhalter 14 angeordneten Zahnstange 30. Die Zahnstange 30 ist auf dem längenveränderlichen Körper 31 einer Teleskopstange 32 befestigt, welche über Gelenke 33, 34 mit dem Brennerhalter 11 und dem Kulissenhalter 14 verbunden ist. Die Gelenke 33, 34 ermöglichen eine bewegliche Verbindung der Teleskopstange 32 mit dem auf der Kulisse 13 teilkreisförmig verfahrbaren Brennerhalter 11.

Für eine leitende Verbindung des sich drehenden Gebers 27 mit dem feststehenden Geber 26 und dem Motor 25 sorgen dem Hohlkörper 20 zugeordnete Schleifringe 37, auf deren Schleifbahn Bürsten 28 unter federndem Druck stehen.

Zur Einstellung des Schneidbrenners 12 kann der Brennerhalter 11 auf der Kulisse in eine senkrechte Mittelstellung oder in eine sich links bzw. rechts von dieser Mittelstellung einstellende Neigungsstellung verfahren werden.

In der senkrechten Mittelstellung stehen der Schneidbrenner 12 und das Brennerschlauchpaket 18 auf der Achse 15 senkrecht übereinander, während der Hohlkörper 20 mit dem daran befestigten Brennerschlauchpaket 18 mittels des Motors 25 in seine höchste Endstellung (Pfeilrichtung 35) gesteuert ist. Das Brennerschlauchpaket 18 weist in dieser senkrechten Mittelstellung eine geringere relative Länge bezüglich einer beispielsweise über die zum Schneidbrenner 12 weisenden Stirnkanten des Hohlkörpers 20 gelegten festen Bezugslinie auf, als bei der Neigungsstellung des Schneidbrenners 12 (Fig. 1). Vorteilhaft dient die senkrechte Mittelstellung als Null-Abgleich für die elektrischen Geber 26, 27. Verfährt der Brennerhalter 11 beispielsweise in die in der Fig. 1 dargestellte Neigungsstellung, dann bewegt sich während der Neigungseinstellung der Körper 31 der Teleskopstange 32 aus der ihn umgebenden Hülse 36 hinaus. Die mit dem Körper 31 verbundene Zahnstange 30 führt eine Linearbewegung aus, die über eine Drehung des Zahnrades 29 des elektrischen Gebers 27 ein elektrisches Signal, vorzugsweise eine Spannung, erzeugt. Mittels dieses in linearer Abhängigkeit von der Neigungseinstellung des Schneidbrenners 12 erzeugten Signals wird der Motor 12 angesteuert, der den Hohlkörper 20 mit dem Brennerschlauchpaket 18 über eine Drehung des Zahnrades 28 entgegengesetzt zur Pfeilrichtung 35 nach unten (Fig. 1 zur Blattunterkante) steuert, wodurch das Brennerschlauchpaket 18 relativ verlängert wird. Durch die elektrische Kupplung des elektrischen Gebers 27 mit dem über Zahnrad 28 mit der Zahnstange 22 des Hohlkörpers 20 in Verbindung stehenden elektrischen Geber 26 werden Drehzahlabweichungen unterdrückt.

Es ist selbstverständlich, daß die Erfindung nicht auf das vorstehende Ausführungsbeispiel beschränkt ist, sondern unterschiedliche Einrichtungen zum Erfassen der relativen Längenänderungen des Brennerschlauchpaketes eingesetzt werden können.

Diese können beispielsweise aus auf der Kulisse 13 angeordneten Kontakten bestehen, die bei Verstellen des Brennerhalters 11 ähnlich einem Schleifkontakt digitale oder analoge Signale erzeugen, die ein Stellsignal für die relative Längenänderung des Brennerschlauchpaketes 18 darstellen und den Motor 25 steuern.

Eine weitere Einrichtung zum Erfassen der relativen Längenänderungen kann beispielsweise die Steuerung der Brennschneidmaschine darstellen. So ist es beispielsweise möglich, den im Bearbeitungsprogramm enthaltenen Neigungsstellungen des Schneidbrenners 12 entsprechende Längenänderungen des Brennerschlauchpaketes 18 zuzuordnen und den Motor 25 über einen Mikroprozessor der Steuerung zu steuern.

## Ansprüche

1. Führungsmaschine für Brenner (12), insbesondere Plasmaschneidbrenner, mit mindestens einem Brenneraggregat (10), an dem ein neigungseinstellbar gelagerter Brenner (12) in einem Brennerhalter (11) angeordnet und der Brenner (12) über ein Brennerschlauchpaket (18) mit Versorgungseinheiten (19) verbunden ist,
dadurch gekennzeichnet,
daß bei der Neigungseinstellung des Brenners (12) eine Einrichtung (27,29,30,32) die relativen Längenänderungen des Brennerschlauchpaketes (18) erfaßt und in Abhängigkeit hiervon Signale erzeugt, mittels welchen ein das Brennerschlauchpaket (18) verschiebender Antrieb (22,24,25) gesteuert wird.

2. Führungsmaschine nach Anspruch 1,
dadurch gekennzeichnet,
daß die Einrichtung eine mit dem Brennerhalter (11) verbundene Teleskopstange (32) als Träger für eine Zahnstange (30) aufweist, welche Zahnstange (30) bei der Neigungseinstellung des Brenners (12) eine Linearbewegung ausführt, die über eine Gleichlaufschaltung (26,27,28,29) zwischen zwei elektrischen Gebern (26,27) zu dem Antrieb (24,25) des Brennerschlauchpaketes (18) geschaltet ist.

3. Führungsmaschine nach Anspruch 1 oder 2,
dadurch gekennzeichnet,
daß das Brennerschlauchpaket (18) in einem Hohlkörper (20) durch das Brenneraggregat (10) geführt und mit dem Hohlkörper (20) verbunden ist und eine an dem Hohlkörper (20) angeordnete Zahnstange (22) über mindestens ein Zahnrad (24) mit einem Motor (25) verbunden ist.

4. Führungsmaschine nach einem der Ansprüche 1 bis 3,
dadurch gekennzeichnet
daß die Zahnstangen (22,30) mit Zahnrädern (28,29) der elektrischen Geber (26,27) kämmen, wobei die in linearer Abhängigkeit von der Neigungseinstellung des Brenners (12) erzeugte Linearbewegung der Zahnstange (30) das ihr zugeordnete Zahnrad (29) des einen elektrischen Gebers (27) dreht und der elektrische Geber (27) in Abhängigkeit von der Drehbewegung Spannungssignale erzeugt.

5. Führungsmaschine nach einem der Ansprüche 1 bis 4,
dadurch gekennzeichnet,
daß der Hohlkörper (29) zwischen Führungselementen (23) verdrehsicher geführt und von einem eine Kulisse (13) tragenden Kulissenhalter (14) umgeben ist, daß der Kulissenhalter (14) mit der Teleskopstange (32) verbunden ist und daß der Kulissenhalter (14) mit der als Träger für den Brennerhalter (14) ausgebildeten Kulisse (13) um den Hohlkörper (20) drehbar ist.

EP 0 324 935 A2

FIG.1

FIG. 2